# EUROPEAN PATENT SPECIFICATION

(11) **EP 4 361 489 B1**
(45) Date of publication and mention of the grant of the patent: **17.06.2026**
(21) Application number: 23205329.8
(22) Date of filing: 23.10.2023
(51) Int. Cl.: F16L 55/172, F16L 55/178

(54) **PIPE COUPLING ENCAPSULATION ASSEMBLY**
ROHRKUPPLUNGSVERKAPSELUNGSANORDNUNG
ENSEMBLE D'ENCAPSULATION DE RACCORD DE TUYAU

(30) Priority: 24.10.2022 US 202218048902
(43) Date of publication of application: 01.05.2024
(73) Proprietor: KRAUSZ INDUSTRIES LTD., Rosh HaAyin 4850001 (IL)
(72) Inventor: Chiproot, Avi, Kfar-Saba (IL)
(74) Representative: Pearl Cohen UK

(56) References cited:
- EP-A1- 0 079 457
- US-A1- 2011 095 520
- US-B2- 8 313 124
- US-B2- 9 551 444

## Description

### FIELD OF THE INVENTION

The present invention relates generally to pipe coupling assemblies, such as those used to sealingly connect pipes together or to repair breaks or leaks in pipes, and particularly to methods for pipe coupling encapsulation in which the pipe coupling fits over existing pipes, bell-shaped joints, sleeve joints, and the like, and seals the pipes or joints.

### BACKGROUND OF THE INVENTION

Many kinds of removable band-type couplings for pipes exist in the art. It is noted that throughout the specification and claims, the term "pipe" encompasses any kind of generally cylindrical object, and the terms "clamp" and "coupling" are used interchangeably.

Many seals are not capable of being used externally over an existing coupling or existing bell joint, because they lack the internal space needed if the repair seal is to be applied over and around an existing but leaking pipe joint. A solution known in the art is a split seal encapsulation pipe repair assembly. The encapsulation seal assembly fits over existing pipes, bell-shaped joints, sleeve joints and the like, and seals the joint. The encapsulation seal assembly includes two metal half-rings that are bolted together at top and bottom flanges of the half-rings. Two elastomeric sealing half-rings are permanently attached to the inside of the two metal half-rings, and these sealing half-rings are clamped on both sides of the leak to stop the leak.

EP-0,079,457A1 describes a pipe coupling and its utilization.

US-2011/095520A1 describes a pipe coupling with seal pressing device.

US-8,313,124B2 describes a pipe junction with seal pressing device.

US9551444B2 describes a pipe coupling capsulation assembly.

### SUMMARY OF THE INVENTION

A pipe coupling encapsulation assembly in accordance with claim 1 and a method in accordance with claim 4 are provided.

The present invention seeks to provide an improved method for pipe coupling encapsulation, as is described more in detail further below. In the prior art, the seals of the encapsulation assembly are only placed at the ends of the assembly; there is no elastomer over the axial length of the assembly. In contrast, in the present invention, the elastomeric seal extends over the entire axial length of the assembly. The axial edges of the elastomeric seal abut against each other when the assembly is clamped to the pipes. A keeper element is provided to ensure that the edges abut against each other and do not overlap each other.

There is provided a pipe coupling encapsulation assembly including an elastomeric ring including two elastomeric annular pipe interface portions that extend from two opposite axial ends of an elastomeric intermediate annular portion, the elastomeric annular pipe interface portions having a smaller annular radius than an annular radius of the elastomeric intermediate annular portion, each of the elastomeric annular pipe interface portions and the elastomeric intermediate annular portion including edges that face each other when the elastomeric ring is placed around a pipe, and a repair coupling which includes a band and opposing clamp members extending outwards from ends of the band, the elastomeric ring being radially inwards of the band.

A keeper element couples an inner surface of the elastomeric intermediate annular portion to the band.

The keeper element includes a first portion that circumferentially extends over the edges of the elastomeric intermediate annular portion and a second portion extending radially inwards from the first portion.

In accordance with a non-limiting embodiment of the present invention the second portion is axially inwards of inner axial surfaces of the elastomeric annular pipe interface portions.

When the opposing clamp members are tightened, the edges of the elastomeric intermediate annular portion and of the elastomeric annular pipe interface portions abut against each other.

There is provided a method for pipe coupling encapsulation including placing an elastomeric ring around a pipe element (which could be a flange, pipe or pipes, or bell joint or other items), the elastomeric ring including two elastomeric annular pipe interface portions that extend from two opposite axial ends of an elastomeric intermediate annular portion, the elastomeric annular pipe interface portions having a smaller annular radius than an annular radius of the elastomeric intermediate annular portion, each of the elastomeric annular pipe interface portions and the elastomeric intermediate annular portion including edges that face each other when the elastomeric ring is placed around the pipe, and the elastomeric ring being radially inside a repair coupling which includes a band and opposing clamp members extending outwards from ends of the band, and tightening the opposing clamp members towards each other with one or more tightening elements, wherein when the opposing clamp members are tightened, the edges of the elastomeric intermediate annular portion and of the elastomeric annular pipe interface portions abut against each other.

A keeper element couples an inner surface of the elastomeric intermediate annular portion to the band, and the keeper element is used to maintain the edges of the elastomeric intermediate annular portion and of the elastomeric annular pipe interface portions in abutment against each other.

### BRIEF DESCRIPTION OF THE DRAWINGS

The present invention will be understood and appreciated more fully from the following detailed description, taken in conjunction with the drawings in which:

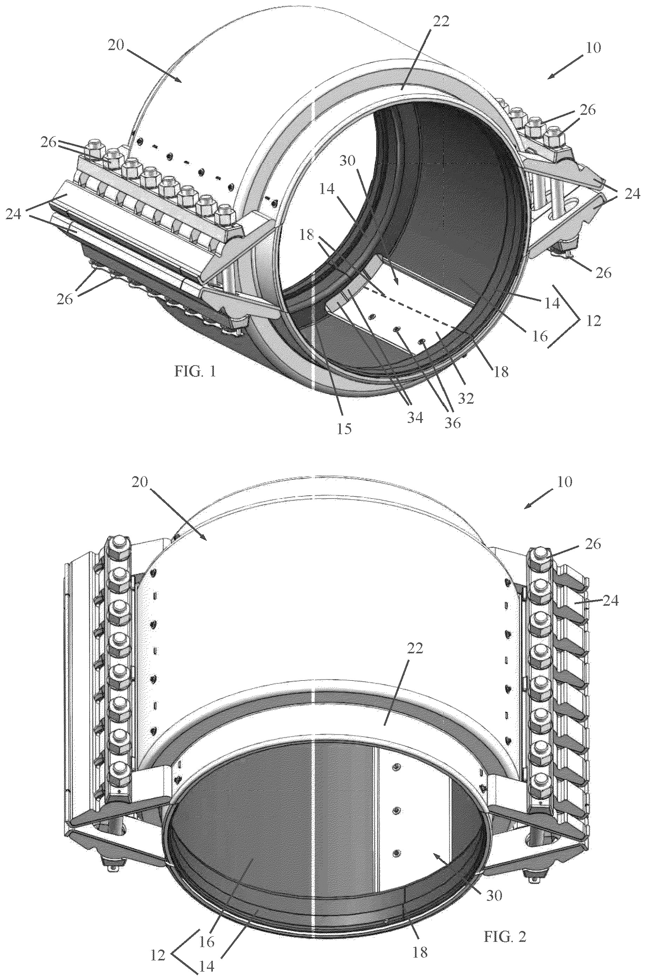

Figs. 1 and 2 are perspective illustrations of a pipe coupling encapsulation assembly, in accordance with a non-limiting embodiment of the present invention.

### DETAILED DESCRIPTION

Reference is now made to Figs. 1 and 2, which illustrate a pipe coupling encapsulation assembly 10, in accordance with a non-limiting embodiment of the present invention.

The pipe coupling encapsulation assembly 10 includes an elastomeric ring 12 that includes two elastomeric annular pipe interface portions 14 that extend from two opposite axial ends of an elastomeric intermediate annular portion 16. The elastomeric annular pipe interface portions 14 each have a smaller annular radius than an annular radius of the elastomeric intermediate annular portion 16. In this manner, the elastomeric annular pipe interface portions 14 can seal against the outer contour of a pipe or pipes, and the elastomeric intermediate annular portion 16 can accommodate a larger diameter of a bell-shaped joint or other structure at the site of the pipe repair.

The elastomeric annular pipe interface portions 14 can have the same annular radius. Alternatively, the elastomeric annular pipe interface portions 14 can each have a different annular radius to accommodate different size pipes.

Each of the elastomeric annular pipe interface portions 14 and the elastomeric intermediate annular portion 16 includes edges 18 that face each other when the elastomeric ring 12 is placed around a pipe. (The edges 18 of the elastomeric intermediate annular portion 16 are shown in hidden, broken lines in Fig. 1.)

The pipe coupling encapsulation assembly 10 includes a repair coupling 20 which includes a band 22 (typically made of metal) and opposing clamp members 24 extending outwards from ends of band 22. The elastomeric ring 12 is radially inwards of band 22. Fasteners 26 are used to tighten the clamp members 24 towards each other. It is seen that band 22 has a shape complementary to elastomeric ring 12, so that it has an intermediate portion with a larger radius than end portions that correspond to the elastomeric annular pipe interface portions 14.

A keeper element 30 is coupled to an inner surface of elastomeric intermediate annular portion 16 and to band 22, such as with one or more fasteners 36 (e.g., rivets or screws). Keeper element 30 includes a first portion 32 that circumferentially extends over edges 18 of elastomeric intermediate annular portion 16, and a second portion 34 extending radially inwards from first portion 32. The second portion 34 is axially inwards of inner axial surfaces 15 of elastomeric annular pipe interface portions 14.

When the opposing clamp members 24 are tightened, the edges 18 of elastomeric intermediate annular portion 16 and of the elastomeric annular pipe interface portions 14 abut against each other.

Accordingly, the pipe coupling encapsulation assembly 10 may be used to repair pipes or leaking pipe joints, without having to interrupt flow through the pipes and joint couplings.

In use, a worker places the elastomeric ring 12 around the pipes on opposite sides of the pipe element. The worker takes repair coupling 20 and places band 22 around the pipe element such that opposite end portions of band 22 overlie elastomeric ring 12. The worker than tightens opposing clamp members 24 towards each other with tightening elements 26 and the repair is complete.

Keeper element 30 can maintain edges 18 of elastomeric intermediate annular portion 16 and of elastomeric annular pipe interface portions 14 in abutment against each other, even under vacuum conditions.

## Claims

1. A pipe coupling encapsulation assembly (10) comprising:
an elastomeric ring (12) comprising two elastomeric annular pipe interface portions (14) that extend from two opposite axial ends of an elastomeric intermediate annular portion (16) of said elastomeric ring (12), said elastomeric annular pipe interface portions (14) having a smaller annular radius than an annular radius of said elastomeric intermediate annular portion (16), each of said elastomeric annular pipe interface portions (14) and said elastomeric intermediate annular portion (16) comprising edges (18) that face each other with said elastomeric ring (12) being placed around a pipe; and
a repair coupling (20) which comprises a band (22) and opposing clamp members (24) extending outwards from ends of said band (22), said elastomeric ring (12) being radially inwards of said band (22), wherein with said opposing clamp members (24) being tightened, said edges (18) of said elastomeric intermediate annular portion (16) and of said elastomeric annular pipe interface portions (14) abut against each other;
and wherein a keeper element (30) couples an inner surface of said elastomeric intermediate annular portion (16) to said band (22), said keeper element (30) comprising a first portion (32) that circumferentially extends over said edges (18) of said elastomeric intermediate annular portion (16) and a second portion (34) extending radially inwards from said first portion (32), wherein said keeper element (30) maintains said edges (18) of said elastomeric intermediate annular portion (16) and of said elastomeric annular pipe interface portions (14) in abutment against each other and ensures that said edges (18) of said elastomeric intermediate annular portion (16) and of said elastomeric annular pipe interface portions (14) do not overlap each other;
**characterised in that** said band (22) has a shape complementary to said elastomeric ring (12), so that said band (22) has an intermediate portion corresponding to said elastomeric intermediate annular portion (16) and having a larger radius than end portions of said band (22) that correspond to said elastomeric annular pipe interface portions (14).

2. The pipe coupling encapsulation assembly (10) according to claim 1, wherein said keeper element (30) maintains said edges (18) of said elastomeric intermediate annular portion (16) and of said elastomeric annular pipe interface portions (14) in abutment against each other even under vacuum conditions.

3. The pipe coupling encapsulation assembly (10) according to claim 1, wherein said second portion (34) is axially inwards of inner axial surfaces (15) of said elastomeric annular pipe interface portions (14).

4. A method for pipe coupling encapsulation comprising:
providing a pipe coupling encapsulation assembly (10) according to any one of claims 1-3;
placing said elastomeric ring (12) around a pipe element;
tightening said opposing clamp members (24) towards each other with one or more tightening elements (26), wherein with said opposing clamp members (24) being tightened, said edges (18) of said elastomeric intermediate annular portion (16) and of said elastomeric annular pipe interface portions (14) abut against each other;
and using said keeper element (30) to maintain said edges (18) of said elastomeric intermediate annular portion (16) and of said elastomeric annular pipe interface portions (14) in abutment against each other.

## Patentansprüche

1. Rohrkupplungsverkapselungsanordnung (10), umfassend:
einen elastomeren Ring (12), der zwei elastomere ringförmige Rohrschnittstellenabschnitte (14) umfasst, die sich von zwei gegenüberliegenden axialen Enden eines elastomeren ringförmigen Zwischenabschnitts (16) des elastomeren Rings (12) erstrecken, wobei die elastomeren ringförmigen Rohrschnittstellenabschnitte (14) einen kleineren Ringradius als ein Ringradius des elastomeren ringförmigen Zwischenabschnitts (16) aufweisen, wobei die elastomeren ringförmigen Rohrschnittstellenabschnitte (14) und der elastomere ringförmige Zwischenabschnitt (16) jeweils Kanten (18) aufweisen, die einander zugewandt sind, wenn der elastomere Ring (12) um ein Rohr herum angebracht ist; und
eine Reparaturkupplung (20), die ein Band (22) und sich von den Enden des Bandes (22) nach außen erstreckende, gegenüberliegende Klemmelemente (24) umfasst, wobei sich der elastomere Ring (12) radial einwärts des Bandes (22) befindet, wobei bei angezogenen gegenüberliegenden Klemmelementen (24) die Kanten (18) des elastomeren ringförmigen Zwischenabschnitts (16) und der elastomeren ringförmigen Rohrschnittstellenabschnitte (14) aneinander anliegen;
und wobei ein Halteelement (30) eine Innenfläche des elastomeren ringförmigen Zwischenabschnitts (16) an das Band (22) ankoppelt, wobei das Halteelement (30) einen ersten Abschnitt (32), der sich in Umfangsrichtung über die Kanten (18) des elastomeren ringförmigen Zwischenabschnitts (16) erstreckt, und einen zweiten Abschnitt (34) umfasst, der sich von dem ersten Abschnitt (32) radial einwärts erstreckt, wobei das Halteelement (30) die Kanten (18) des elastomeren ringförmigen Zwischenabschnitts (16) und der elastomeren ringförmigen Rohrschnittstellenabschnitte (14) in Anlage aneinander hält und sicherstellt, dass sich die Kanten (18) des elastomeren ringförmigen Zwischenabschnitts (16) und der elastomeren ringförmigen Rohrschnittstellenabschnitte (14) nicht überlappen;
**dadurch gekennzeichnet, dass** das Band (22) eine zu dem elastomeren Ring (12) komplementäre Form aufweist, so dass das Band (22) einen Zwischenabschnitt aufweist, der dem elastomeren ringförmigen Zwischenabschnitt (16) entspricht und einen größeren Radius aufweist als die Endabschnitte des Bandes (22), die den elastomeren ringförmigen Rohrschnittstellenabschnitten (14) entsprechen.

2. Rohrkupplungsverkapselungsanordnung (10) nach Anspruch 1, wobei das Halteelement (30) die Kanten (18) des elastomeren ringförmigen Zwischenabschnitts (16) und der elastomeren ringförmigen Rohrschnittstellenabschnitte (14) auch unter Vakuumbedingungen in Anlage aneinander hält.

3. Rohrkupplungsverkapselungsanordnung (10) nach Anspruch 1, wobei der zweite Abschnitt (34) axial einwärts der inneren axialen Oberflächen (15) der elastomeren ringförmigen Rohrschnittstellenabschnitte (14) liegt.

4. Verfahren zur Rohrkupplungsverkapselung, umfassend:
Bereitstellen einer Rohrkupplungsverkapselungsanordnung (10) nach einem der Ansprüche 1-3;
Anbringen des elastomeren Rings (12) um ein Rohrelement herum;
Anziehen der einander gegenüberliegenden Klemmelemente (24) zueinander mit einem oder mehreren Spannelementen (26), wobei, wenn die einander gegenüberliegenden Klemmelemente (24) angezogen sind, die Kanten (18) des elastomeren ringförmigen Zwischenabschnitts (16) und der elastomeren ringförmigen Rohrschnittstellenabschnitte (14) aneinander anliegen;
und Verwenden des Halteelements (30), um die Kanten (18) des elastomeren ringförmigen Zwischenabschnitts (16) und der elastomeren ringförmigen Rohrschnittstellenabschnitte (14) in Anlage aneinander zu halten.

## Revendications

1. Ensemble d'encapsulation de raccord de tuyau (10), comprenant :
un anneau en élastomère (12) comprenant deux parties d'interface de tuyau annulaires en élastomère (14) qui s'étendent à partir de deux extrémités axiales opposées d'une partie annulaire intermédiaire en élastomère (16) dudit anneau en élastomère (12), lesdites parties d'interface de tuyau annulaires en élastomère (14) ayant un rayon annulaire plus petit que le rayon annulaire de ladite partie annulaire intermédiaire en élastomère (16), chacune desdites parties d'interface de tuyau annulaires en élastomère (14) et ladite partie annulaire intermédiaire en élastomère (16) comprenant des bords (18) qui se font mutuellement face, ledit anneau en élastomère (12) étant placé autour d'un tuyau ; et
un raccord de réparation (20) qui comprend une bande (22) et des éléments de serrage opposés (24) s'étendant vers l'extérieur à partir des extrémités de ladite bande (22), ledit anneau en élastomère (12) étant situé radialement vers l'intérieur par rapport à ladite bande (22), dans lequel, lorsque lesdits éléments de serrage opposés (24) sont serrés, lesdits bords (18) de ladite partie annulaire intermédiaire en élastomère (16) et desdites parties d'interface de tuyau annulaires en élastomère (14) viennent en butée les uns contre les autres ;
et dans lequel un élément de retenue (30) relie une surface intérieure de ladite partie annulaire intermédiaire en élastomère (16) à ladite bande (22), ledit élément de retenue (30) comprenant une première partie (32) qui s'étend circonférentiellement sur lesdits bords (18) de ladite partie annulaire intermédiaire en élastomère (16) et une seconde partie (34) s'étendant radialement vers l'intérieur à partir de ladite première partie (32), dans lequel ledit élément de retenue (30) maintient lesdits bords (18) de ladite partie annulaire intermédiaire en élastomère (16) et desdites parties d'interface de tuyau annulaires en élastomère (14) en butée les uns contre les autres et garantit que lesdits bords (18) de ladite partie annulaire intermédiaire en élastomère (16) et desdites parties d'interface de tuyau annulaires en élastomère (14) ne se chevauchent pas mutuellement :
**caractérisé en ce que** ladite bande (22) a une forme complémentaire à celle dudit anneau en élastomère (12), de sorte que ladite bande (22) présente une partie intermédiaire correspondant à ladite partie annulaire intermédiaire en élastomère (16) et présentant un rayon plus grand que les parties d'extrémité de ladite bande (22) qui correspondent auxdites parties d'interface de tuyau annulaires en élastomère (14).

2. Ensemble d'encapsulation de raccord de tuyau (10) selon la revendication 1, dans lequel ledit élément de retenue (30) maintient lesdits bords (18) de ladite partie annulaire intermédiaire en élastomère (16) et desdites parties d'interface de tuyau annulaires en élastomère (14) en butée les uns contre les autres, même dans des conditions de vide.

3. Ensemble d'encapsulation de raccord de tuyau (10) selon la revendication 1, dans lequel ladite seconde partie (34) est située axialement vers l'intérieur par rapport à des surfaces axiales intérieures (15) desdites parties d'interface de tuyau annulaires en élastomère (14).

4. Procédé d'encapsulation de raccord de tuyau, comprenant :
la fourniture d'un ensemble d'encapsulation de raccord de tuyau (10) selon l'une quelconque des revendications 1 à 3 ;
la mise en place dudit anneau en élastomère (12) autour d'un élément de tuyau ;
le serrage desdits éléments de serrage opposés (24) l'un vers l'autre à l'aide d'un ou plusieurs éléments de serrage (26), dans lequel, lorsque lesdits éléments de serrage opposés (24) sont serrés, lesdits bords (18) de ladite partie annulaire intermédiaire en élastomère (16) et desdites parties d'interface de tuyau annulaires en élastomère (14) viennent en butée les uns contre les autres ;
et l'utilisation dudit élément de retenue (30) pour maintenir lesdits bords (18) de ladite partie annulaire intermédiaire en élastomère (16) et desdites parties d'interface de tuyau annulaires en élastomère (14) en butée les uns contre les autres.
